# EUROPEAN PATENT APPLICATION

(11) **EP 3 093 838 A1**
(43) Date of publication of application: **16.11.2016**
(21) Application number: 16168865.0
(22) Date of filing: 10.05.2016
(51) Int. Cl.: G09G 3/34

(54) **REMOVABLE FRONT WITH E-INK DISPLAY**

(30) Priority: 15.05.2015 US 201514713467
(71) Applicant: GE Intelligent Platforms, Inc., Charlottesville, VA 22911 (US)
(72) Inventor: ALLEY, Daniel Milton, Salem, VA 24153-6422 (US); HINCHY, Shawn, Salem, VA 24153-6422 (US); HATMAKER, Tommy J., Salem, VA 24153-6422 (US)
(74) Representative: Fischer, Jens Peter

(57) **Abstract**

A display module 102 is coupled to a first universal control module 108 and the display module 102 includes an e-ink display 122. The first universal control module 108 is configured to be connected to a control system 114. The first universal control module 108 is customizable and programmable. Information is subsequently received. At least some of the information is rendered on the e-ink display 122. The information includes at least one of: information as to an installation of the universal control module, or information as to the status of the universal control module. The e-ink display 122 is configured to display the information in the absence of power being provided to the e-ink display or when the display module is removed from the first universal control module.

## Description

### BACKGROUND OF THE INVENTION

### FIELD OF THE INVENTION

The subject matter disclosed herein generally relates to display systems and, more specifically, to e-ink displays.

### BRIEF DESCRIPTION OF THE RELATED ART

Today, electronically programmable devices (and other electronic devices) with configurable parameters have paper labels that are used to display various types of information to a user. These paper labels are typically fixed to the device and cannot be changed.

In addition, many types of devices require user interaction to configure and/or operate the device. For example, various electronic modules may need to be programmed and/or have wiring connections be made. In order to accomplish these goals, instructions or user guides are typically needed for the user. Unfortunately, these sets of instructions and guides are often physically large and cumbersome to utilize. Liquid crystal displays (LCDs) and light emitting diode (LED) displays have been used, but typically require continuous power to operate. Battery powered displays also exist for many products. However, batteries have a limited life thereby severely limiting the operations of the device.

These shortcomings have resulted in some user dissatisfaction with previous approaches.

### BRIEF DESCRIPTION OF THE INVENTION

Display modules are provided that eliminate or substantially reduce the problems associated with paper labels or LCD/LED displays. In one aspect, a display, screen, or label is provided (utilizing electronic paper that employs e-ink to create images). In some examples, the screen, display, or label has an appearance similar to that of a paper label (with color or black and white printing). Through an electronic interface, the screen, display, or label is updated programmatically and/or automatically. It will be appreciated that the terms "screen," "display," "electronic paper display," and "label" are used interchangeably herein. This e-ink screen could hold a static image or text without any required electricity to maintain the image. The e-ink screens provided herein have the benefit of being configurable, but do not require additional power and are available even if the electronic module to which the screen is coupled is powered down. The labels could be of the type disclosed in application no. 62/022981 and in application no. PCT/US14/069247, filed on July 10, 2014 and December 9, 2014, respectively, which are incorporated herein by reference in their entirety.

In another advantage, programmable labeling for electronic devices could replace both static labels and LCD/LED displays for conveying configuration, registration, user interface, user interaction, or status information for programmable or pre-programmed electronic devices. Dynamic updates could be provided and as mentioned, once made, would require no power or maintenance to continue to display values.

The display modules presented herein can also be removed from the device to which they are attached and still operate with no device supplied power. Consequently, the display modules provided herein can be moved from location-to-location thereby providing portability.

In many of these embodiments, a display module is coupled to a first universal control module and the display module includes an e-ink display. The first universal control module is configured to be connected to a control system and is customizable and programmable. Information is subsequently received. At least some of the information is rendered on the e-ink display. The information includes at least one of information as to an installation of the universal control module, or information as to the status of the universal control module. The e-ink display is configured to display the information in the absence of power being provided to the e-ink display or when the display module is removed from the first universal control module.

In some examples, the information is received from the first universal control module. In other aspects, the display module is decoupled from the first universal control module and then coupled to a second universal control module that is configured to be connected to the control system. The second universal control module is also customizable and programmable.

In some aspects, the information rendered on the e-ink display comprises a wiring connection diagram. In other examples, the information rendered on the e-ink display comprises technical support information.

In still other aspects, the display module further comprises one or more light emitting diodes. In other examples, the one or more light emitting diodes are deactivated in the absence of device power being provided to the e-ink display or when the display module is removed from the first universal control module.

In still other examples, the display module further comprises a user interface for receiving user commands. In some examples, the user interface comprises buttons.

In others of these embodiments, an apparatus is configured to be coupled to a universal control module. The universal control module is configured to be connected to a control system, and the universal control module is customizable and programmable. The apparatus includes a controller having an input and output, and a display module that is coupled to the controller. The display module includes an e-ink display. The controller is configured to receive information at the input, and configured to render at least some of the information to the e-ink display via the output. The information includes information relating to at least one of an installation of the universal control module and a status of the universal control module. The e-ink display is configured to display the information in the absence of power being provided to the e-ink display or when the display module is removed from the universal control module.

### BRIEF DESCRIPTION OF THE DRAWINGS

For a more complete understanding of the disclosure, reference should be made to the following detailed description and accompanying drawings wherein:
FIG. 1 comprises a side view of a display module system according to various embodiments of the present invention;
FIG. 2 comprises a front view of the display module system of FIG. 1 according to various embodiments of the present invention;
FIG. 3 comprises a perspective view of a display module system according to various embodiments of the present invention;
FIG. 4 comprises a perspective view of the display module system of FIG. 3 in an open state according to various embodiments of the present invention;
FIG. 5 comprises a perspective view of the display module system of FIG. 3 with the display module removed according to various embodiments of the present invention;
FIG. 6 comprises a block diagram of a display module system according to various embodiments of the present invention;
FIG. 7 comprises a flowchart of the operation of a display module of FIG. 5 according to various embodiments of the present invention;
FIG. 8 comprises a flowchart showing an LED update approach for the system of FIG. 5 according to various embodiments of the present invention;
FIG. 9 comprises a flowchart showing the operation of a display module of FIG. 5 according to various embodiments of the present invention.

Skilled artisans will appreciate that elements in the figures are illustrated for simplicity and clarity. It will further be appreciated that certain actions and/or steps may be described or depicted in a particular order of occurrence while those skilled in the art will understand that such specificity with respect to sequence is not actually required. It will also be understood that the terms and expressions used herein have the ordinary meaning as is accorded to such terms and expressions with respect to their corresponding respective areas of inquiry and study except where specific meanings have otherwise been set forth herein.

### DETAILED DESCRIPTION OF THE INVENTION

The present approaches provide a display module including an e-ink display that can be moved between universal control modules. The display modules so-provided and in some aspects include an installation mode where wiring connections can be presented to a user, or a status mode where the status of the universal control module can be shown to the user. The display modules described herein are portable and can be moved from universal control module to universal control module and display information as needed on the fly. As such, the present approaches eliminate the need for a large amount of paper documents or documentation that can be lost or cumbersome for a user to utilize.

In other aspects, the present display modules also include one or more light emitting diodes (LEDs). In some examples, the display modules include a flash memory (or other type of memory) where pixel maps (bit maps) may be stored. These maps can be pulled (read) directly out of the memory and rendered on the e-ink display for items that the user will want to display frequently. Using pre-stored maps increases the speed of the system since various translation times are eliminated.

As mentioned, the present approaches eliminate large amounts of paper documentation, which is often lost by users. This is especially beneficial for device wiring of universal products. In these situations, a reduction of incorrect wiring is achieved and the ability to provide user labels on the screen replaces handwritten stickers. The present approaches also provide the ability to show alarms and diagnostics even with power off at the display module.

In many of these embodiments, a removable display module allows for non-volatile e-ink based status displays along with LED based channel status indicators. The use of the e-ink display provides selection of display screens showing (for example) module status, channel wiring, diagnostics and alarms, and other screens for reduction of module printed documentation. By providing for screen changes when the module is powered off or the display is removed from the module, the display can serve as an installation guide and diagnostic tool. When combined with a universal input output (IO) or control module, the display allows for the user to select the channel and mode for specific wiring instructions that change according to the channel and mode. Without this display the user is forced to use printed directions that often get misplaced during panel assembly and testing, leading to extra rework and/or system failures due to mis-wiring.

In some aspects, the display module is a removable front panel with a combination of non-volatile e-ink and LED matrix displays and provides status for a module within a control system. As mentioned, this eliminates the need for paper documentation both at installation and during operation, with the equivalent information available on the e-ink display screen.

Various patterns, images, displays, or graphics can be displayed on the e-ink display. Examples of e-ink display patterns include control system parameter names (downloaded from the system software tools), wiring information (which may change with the software configuration of the module), and errors/alarm indications. The display module is "universal" since it may be applied or coupled to various modules within the control system including power supplies, CPU modules, and IO modules. In some aspects, the control system provides the module type and screen downloads via a serial port flowing via the edge connector.

In some examples, the panel hinges on the top of the module to swing down over the module front, mating along the module face with an edge connector onto the edge of an electronics board within the module. In other examples, the display module may be fixed in position.

In other examples, the e-ink display is used for status on the module where the status patterns infrequently change, with the LED indicators used for channel status that changes at a much faster frame rate. This approach maximizes the operating lifetime of the e-ink display which has a limited number of pixel changes. In support of the various types of modules, different overlays may be applied to the display to block or allow an individual LED to be shown as well as provide text identification for the LED. This allows the display circuit board to be built with all of the LEDs to increase the board production volume and reduce the number of factory stock items.

In some aspects, the display module may utilize an internal battery that allows display operation when the panel is removed from the module or the module is powered down. In other aspects, the LED indicators are not operational when the display is removed from the module, both due to lack of channel information and to preserve battery life.

In still other aspects, a separate serial port is provided on the edge connector for the LED status information. A microcontroller within the display panel serves to parse the information on the two serial ports, merging that information with information held within a flash memory and driving the display interfaces for the e-ink panel and the LED matrix. A temperature sensor is used to adjust the timing of pulses and writes to the e-ink display, compensating for the e-ink display internal fluid's viscosity changing with temperature in turn affecting the display response time.

In other examples, battery and edge connector supplied power rails are utilized and are merged using diode-or circuitry to run the internal panel circuits, with the microcontroller monitoring each rail to allow reporting of a need to replace the battery as well as sense if sufficient voltage exists to update a particular display.

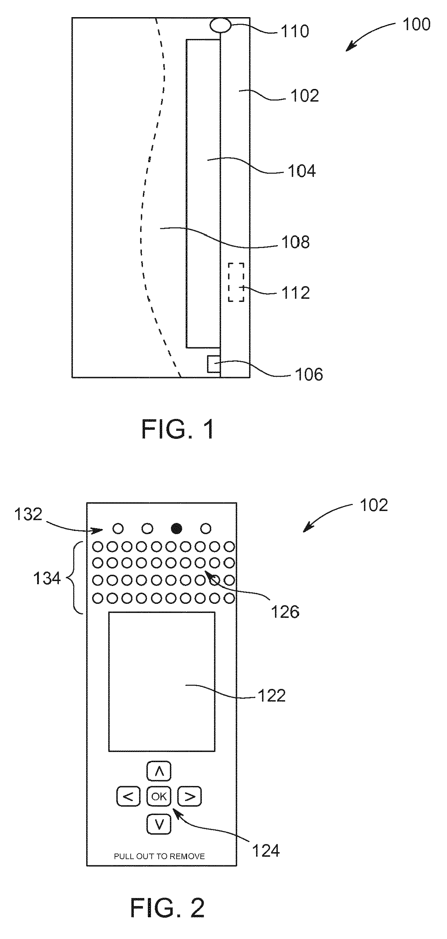

Referring now to FIGs. 1-2, a display system 100 with e-ink display is described. The system 100 includes a display module 102, a user wire terminal block 104, an edge connector 106 between the display module 102 and a universal control module 108, a hinge 110, and a controller 112 (either as a part of the display module or a separate component).

The universal control module 108 is configured to be connected to a control system 114. The control system (not shown) could be any type of control system such as a control system for a factory, power plant, assembly line, to mention a few examples. The universal control module 108 is customizable and programmable to suit the requirements of a particular control system, environment, or set of operating conditions.

The display module 102 is coupled to the controller and includes an e-ink display 122, buttons 124, and light emitting diodes 126.

The controller 112 is configured to receive information at its input, and configured to render via its output at least some of the information on the e-ink display 122. The controller 112 may be any combination of hardware and software and may, in one example, be a microprocessor executing computer instructions. The information may relate to installation of the universal control module or a status of the universal control module. Other types of information may also be displayed. The e-ink display 122 is configured to display the information in the absence of power being provided to the e-ink display 122 or when the display module is removed from the universal control module 108.

As will be appreciated, the display module 102 may include both static (e.g., non-volatile e-ink based graphics via the e-ink display 122) and dynamic (e.g., light emitting diodes 126 that may be bi-color LED indicators in one example) along with user input switches (buttons 124). The display module 102 fits onto the front of a universal control module) with the IO pack user wire terminal block 104 recessed behind the display module 102. The edge connector 106 at the bottom of the display module 102 provides power and communications to the display module 102, which is hinged at the top of the IO pack user wire terminal block 104 by the hinge 110 to swing down over the user wire terminal block 104 within. Various types of communications may be received from or transmitted to the universal control module. In these regards, both UART and SPI communications (and connections) can be used to communicate with the universal control module 108.

In some aspects, the display module 102 has a controller 112 with memory for operations with battery supply to allow the display to operate even when the module is separate from the user wire terminal block 104.

In another aspect, the buttons 124 (which can also be any type of switches or actuators) allow the user to sequence the graphics displays across channels (of the universal control module) for both software status and wiring information screens. The e-ink display 122 allows the display to operate at very low power even when the universal control module 108 is not powered from the rack.

LEDs 126 include pack status indicators 132 and channel status indicators 134. The channel indicator LEDs 134 are only operational while the rack power is applied from the I/O pack, controlled from the microcontroller.

LEDs 126 are under control of the controller 112, and in one example are intended to be updated only when the display is powered from the universal control module 108. The communications format will include definition of the available channel indicators, since the module may be part of 8, 16, 24, 32, and 40 channel future products to mention a few examples.

In one example, the e-ink display 122 may an E-Ink 2" display (model number EG020BS011) manufactured by E-Ink Corporation that includes 96 pixels per row with 200 rows using a pitch of 111 dots per inch operating over a range of -20 to 50 degrees C. Other examples are possible.

Varying font sizes can be obtained using the e-ink display 122. It will be appreciated that the number of pixels (height) per character can vary, increasing as the font size increases. As the font increases for a longer reading distance, the number of characters decreases on the limited display screen. In one aspect, each display for the e-ink display 122 is stored within a flash memory at the display module. The flash memory (or any or suitable type of memory device) is capable of holding hundreds or thousands of display images.

Full power operation for parsing communications to update graphics and LED traffic, operating when the display is under universal control module (IO pack), and sensing when this power is removed to set up hibernation to extend battery life.

In other examples, a timer may be used for sensing button presses to shift screens, operating when the battery (using wake up from hibernation) or the universal control module (IO pack) is powering the unit. In some aspects, LED driver functions when the display module 102 is under universal control module 108 (IO pack) power.

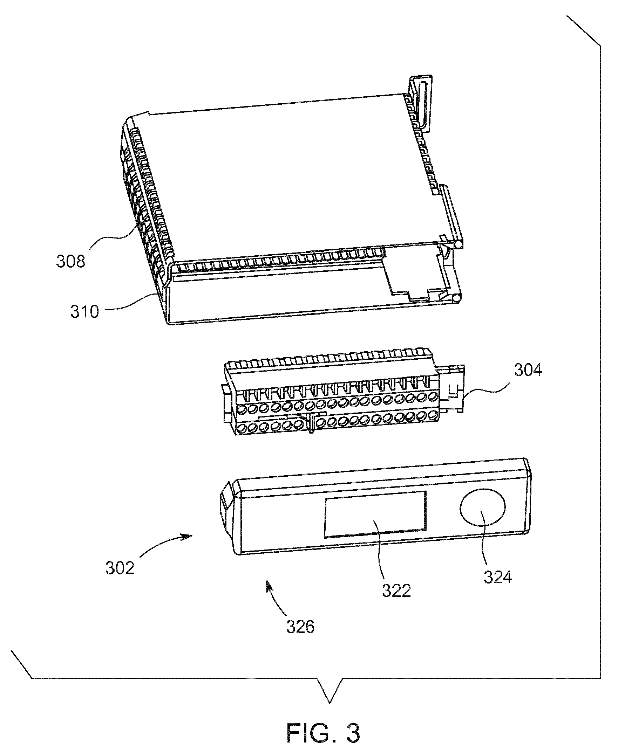

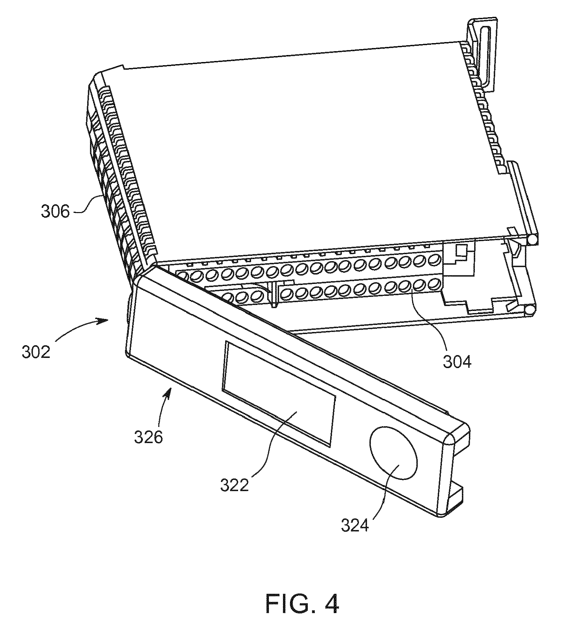

Referring now to FIG. 3, 4, and 5, another example of a system including a display module 302 is described. The system includes the display module 302, a user wire terminal block 304, a universal control module 308, and a hinge 310.

The display module 302 includes an e-ink display 322, a user interface (e.g., buttons) 324 and an LED display 326. The user wire terminal block 304 is a part of or associated with the universal control module 308 and allows users to make wiring connections on, at, or within the universal control module. The universal control module 308 is customizable and programmable to suit the requirements of a particular control system, environment, or set of operating conditions.

The hinge 310 allows the display module to be opened while still being attached. The hinges are on the top of the module 302, allowing the module 302 to swing down over the module front, mating along the module face with an edge connector onto the edge of an electronics board within the module.

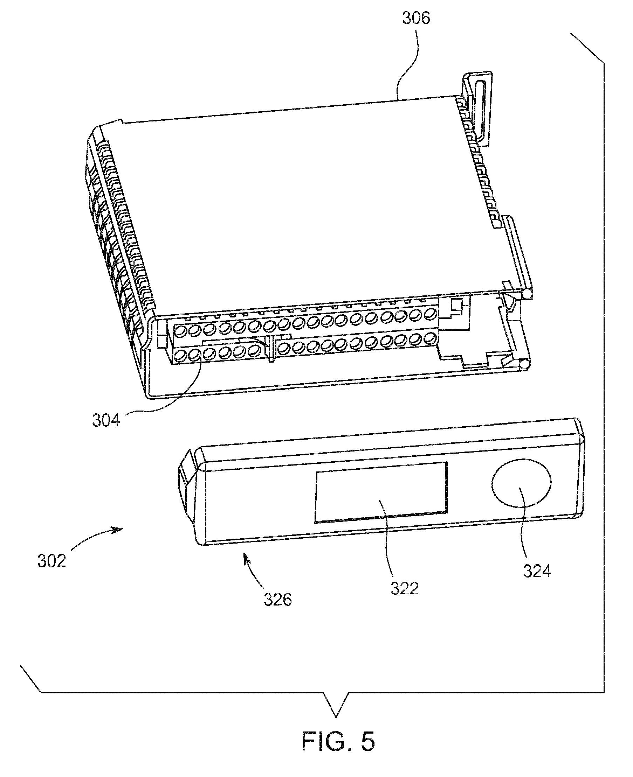

As shown in FIG. 5, the display module can be fully removed from the universal control module. Updates to the e-ink display 322 on the display module 302 may occur when the module 302 is not powered or the display section removed. For example, updates could be caused by a user pressing the user interface 324 to cycle through information charts. In one aspect, the LEDs 326 are disabled when module power is off or the display module is removed.

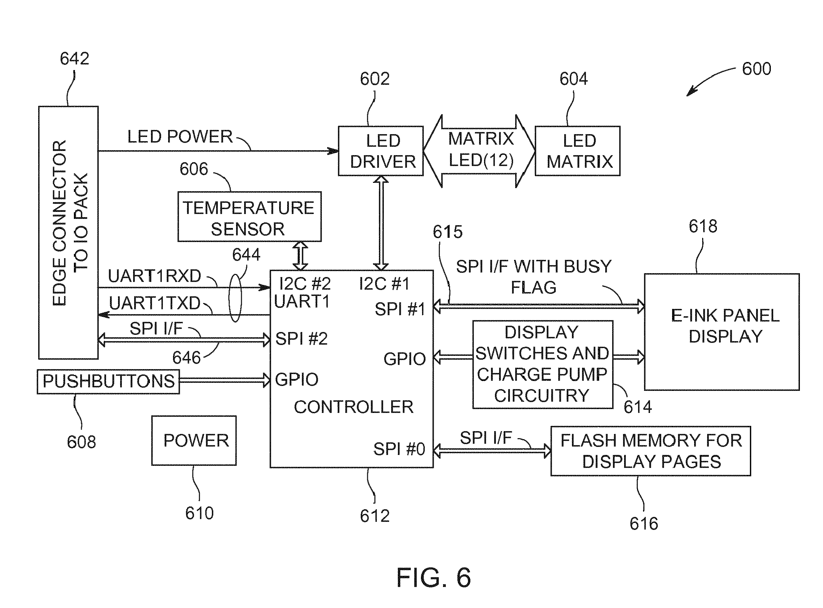

Referring now to FIG. 6, a display module 600 includes an LED driver 602, LED matrix 604, a temperature sensor 606, push buttons 608, a power source 610, a controller 612, display switches and charge pump circuitry 614, a flash memory 616, and an e-ink display 618.

The LED driver 602 is electrical interface circuitry that converts commands to driver commands to drive actual LEDs. The LED matrix 604 includes one or more LEDs.

The temperature sensor 606 may sense temperatures for display. The temperature sensor 606 is used to adjust the timing of pulses and writes to the e-ink display 618, compensating for the e-ink display 618 internal fluid's viscosity changing with temperature in turn affecting the display response time. In some examples, the temperature sensor 606 may be eliminated.

The push buttons 608 allow the user to enter commands or move an icon around the e-ink display.

The power source 610 may be an internal battery. In one aspect, the internal battery allows display operation when the panel is removed from the module 600 or the module 600 is powered down. The LED indicators 604 are not operational when the display is removed from the module, both due to lack of channel information and to preserve battery life.

The controller 612 is configured to operate the various devices in the system. The display switches and charge pump circuitry 614, which includes circuitry needed to activate the e-ink display 618. A SPI I/F with busy flag line 615 is coupled between the controller 612 and the e-ink display 618. The purpose of the line 615 is to provide bit patterns for display rows and columns read by the controller 612 from the flash memory 616 and written to the display 618 to form images on the display.

The flash memory 616 stores pixel maps (bit maps) of displays to be rendered on the e-ink display. These maps can be read directly from the memory 616 and rendered on the e-ink display 618 for items, screens, or patterns that the user desires to display frequently. Using pre-stored maps increases the speed of the system since various translation times are eliminated.

In one example, the e-ink display 618 may an E-Ink 2" display (model number EG020BS011) manufactured by E-Ink Corporation that includes 96 pixels per row with 200 rows using a pitch of 111 dots per inch operating over a range of -20 to 50 degrees C. Other examples are possible.

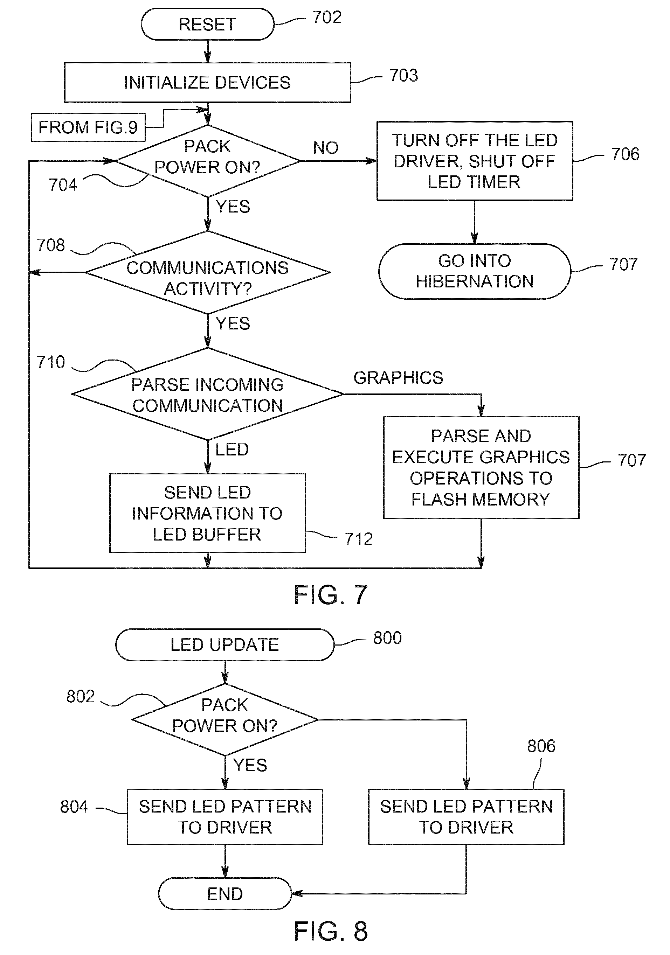

In one example of the operation of the system of FIG. 6, information is received at controller 612 via an edge connection 642 over either UART line 644 or SPI interface 646. Power for the LED matrix 604 is supplied from the edge connectors by the LED driver. At least some of the information is rendered on the e-ink display 618. The information includes information as to an installation of the universal control module, information for LED indicators, or information as to the status of the universal control module. Other examples of information are possible. The e-ink display 618 is configured to display the information in the absence of power being provided to the e-ink display or when the display module is removed from the first universal control module. More details of the operation of the system of FIG. 6 are described with respect to FIG. 7, FIG. 8, and FIG. 9 below.

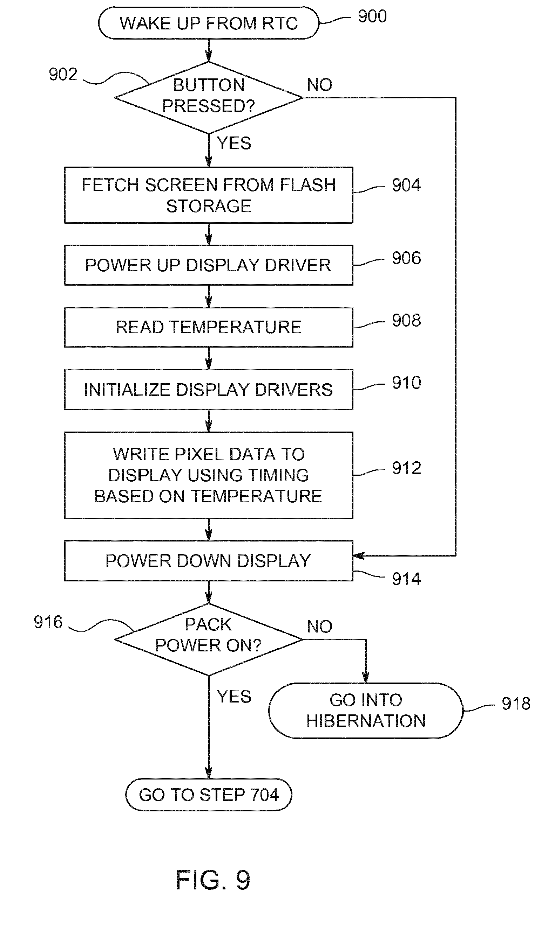

Referring now to FIG. 7, one example of the operation of a display module 600 is described. At step 702, the reset operation begins. At step 703, various devices are initialized (e.g., timers and drivers). At step 704, it is determined by the controller 612 if the power of the universal control module (the pack) is on. If the answer is negative, at step 706 the LED driver is turned off and the LED displays are turned off. At step 707, the display module goes into hibernation or sleep mode. The sleep mode will be exited only by the real time clock (RTC) as shown in FIG. 9.

If the answer is affirmative at step 704, then at step 708 it is determined if there is any communication activity (from the universal control module or some other source) via the lines 644 or 646. If the answer is negative, control returns to step 704. If the answer is affirmative, then at step 710 the incoming communication activity/messages are parsed by the controller 612. If the communication relates to LED activity, at step 712 LED information is sent to a LED buffer (not shown) so that the LED driver 602 can drive the LEDs 604 to display the information. At step 714 and if the communication is a graphic command for the e-ink display 618, the controller 612 parses and executes graphic operations from information in flash memory 616.

Referring now to FIG. 8, one example of the operation of the display module 600 is described with respect to an update to the LEDs 604. At step 800 LED update routine is entered. At step 802, it is determined if the power of the universal control module (the pack) is on. If the answer is negative, at step 804 the LED driver 602 is turned off and the LEDs 604 are turned off. If the answer is affirmative, at step 806 the LED pattern is sent to the LED driver 602 from the controller 604. In one example, the LED pattern is a bit map representing an image that is stored in the flash memory 616 and obtained by the controller 604.

Referring now to FIG. 9, one example of the operation of the display module 600 is described. In this approach, a timer may be used to sense button presses, where the button presses are used to shift screens on the e-ink display. This operation occurs when the battery (using wake up from hibernation) or the IO pack (universal control module) is powering the unit.

At step 900, the routine is entered. At step 902, it is determined if a button is pressed. If the answer at step 902 negative, execution continues with step 914. If the answer at step 902 affirmative, then at step 904 a screen is fetched (read) from flash memory 606.

At step 906, the display driver for e-ink display 618 is powered up. At step 908, the temperature is read. At step 910, display drivers are initialized.

At step 912, pixel data is written to the e-ink display 618 using a timing based upon the measured temperature. At step 914, the e-ink display 618 is powered down.

At step 916, it is determined if the power of the universal control module (the pack) is on. If the answer is negative, at step 918 the LED driver 602 is turned off and the display is turned off. If the answer at step 918 is affirmative, the program returns to the loop in FIG. 7 entering step 704.

It will be appreciated by those skilled in the art that modifications to the foregoing embodiments may be made in various aspects. Other variations clearly would also work, and are within the scope and spirit of the invention. It is deemed that the spirit and scope of that invention encompasses such modifications and alterations to the embodiments herein as would be apparent to one of ordinary skill in the art and familiar with the teachings of the present application.

Various aspects and embodiments of the present invention are defined by the following numbered clauses:
1. A method, comprising:
   coupling a display module to a first universal control module, the display module including an e-ink display, the first universal control module being configured to be connected to a control system, the first universal control module being customizable and programmable;
   subsequently receiving information;
   rendering at least some of the information on the e-ink display, the information including information relating to at least one of: an installation of the universal control module and a status of the universal control module, the e-ink display configured to display the information in the absence of power being provided to the e-ink display or when the display module is removed from the first universal control module.
2. The method of clause 1, wherein the information is received from the first universal control module.
3. The method of clause 1 or clause 2, further comprising de-coupling the display module from the first universal control module and coupling the display module to a second universal control module that is configured to be connected to the control system, the second universal control module being customizable and programmable.
4. The method of any preceding clause, wherein rendering the information on the e-ink display comprises rendering a wiring connection diagram.
5. The method of any preceding clause, wherein rendering the information on the e-ink display comprises rendering technical support information.
6. The method of any preceding clause, wherein the display module further comprises one or more light emitting diodes.
7. The method of any preceding clause, wherein the one or more light emitting diodes are deactivated in the absence of power being provided to the e-ink display module or when the display module is removed from the first universal control module.
8. The method of any preceding clause, wherein the display module further comprises a user interface for receiving user commands.
9. The method of any preceding clause, wherein the user interface comprises buttons.
10. An apparatus that is configured to be coupled to a universal control module, the universal control module being configured to be connected to a control system, the universal control module being customizable and programmable, the apparatus comprising:
   a controller having an input and output;
   a display module that is coupled to the controller, the display module including an e-ink display, wherein the controller is configured to receive information at the input, and configured to render at least some of the information on the e-ink display via the output, the information including information relating to at least one of: an installation of the universal control module and a status of the universal control module, the e-ink display configured to display the information in the absence of power being provided to the e-ink display or when the display module is removed from the universal control module.
11. The apparatus of clause 10, wherein the information is received from the universal control module.
12. The apparatus of clause 10 or clause 11, wherein the display module is configured to be decoupled from the universal control module.
13. The apparatus of any of clause 10 to 12, wherein the information rendered on the e-ink display comprises a wiring connection diagram.
14. The apparatus of any of clause 10 to 13, wherein the information rendered on the e-ink display comprises technical support information.
15. The apparatus of any of clause 10 to 14, wherein the display module further comprises one or more light emitting diodes.
16. The method of any of clause 10 to 15, wherein the display module further comprises a user interface for receiving user commands.
17. The apparatus of clause 16, wherein the user interface comprises buttons.

## Claims

1. A method, comprising:
coupling a display module to a first universal control module, the display module including an e-ink display, the first universal control module being configured to be connected to a control system, the first universal control module being customizable and programmable;
subsequently receiving information;
rendering at least some of the information on the e-ink display, the information including information relating to at least one of: an installation of the universal control module and a status of the universal control module, the e-ink display configured to display the information in the absence of power being provided to the e-ink display or when the display module is removed from the first universal control module.

2. The method of claim 1, wherein the information is received from the first universal control module.

3. The method of claim 1 or claim 2, further comprising de-coupling the display module from the first universal control module and coupling the display module to a second universal control module that is configured to be connected to the control system, the second universal control module being customizable and programmable.

4. The method of any preceding claim, wherein rendering the information on the e-ink display comprises rendering a wiring connection diagram.

5. The method of any preceding claim, wherein rendering the information on the e-ink display comprises rendering technical support information.

6. The method of any preceding claim, wherein the display module further comprises one or more light emitting diodes.

7. The method of any preceding claim, wherein the one or more light emitting diodes are deactivated in the absence of power being provided to the e-ink display module or when the display module is removed from the first universal control module.

8. The method of any preceding claim, wherein the display module further comprises a user interface for receiving user commands.

9. The method of any preceding claim, wherein the user interface comprises buttons.

10. An apparatus that is configured to be coupled to a universal control module, the universal control module being configured to be connected to a control system, the universal control module being customizable and programmable, the apparatus comprising:
a controller having an input and output;
a display module that is coupled to the controller, the display module including an e-ink display, wherein the controller is configured to receive information at the input, and configured to render at least some of the information on the e-ink display via the output, the information including information relating to at least one of: an installation of the universal control module and a status of the universal control module, the e-ink display configured to display the information in the absence of power being provided to the e-ink display or when the display module is removed from the universal control module.

11. The apparatus of claim 10, wherein the information is received from the universal control module.

12. The apparatus of claim 10 or claim 11, wherein the display module is configured to be decoupled from the universal control module.

13. The apparatus of any of claims 10 to 12, wherein the information rendered on the e-ink display comprises a wiring connection diagram.

14. The apparatus of any of claims 10 to 13, wherein the information rendered on the e-ink display comprises technical support information.

15. The apparatus of any of claims 10 to 14, wherein the display module further comprises one or more light emitting diodes.
